(19) Europäisches Patentamt

European Patent Office

Office européen des brevets

(11) **EP 3 345 456 B1**

(12) # FASCICULE DE BREVET EUROPEEN

(45) Date de publication et mention de la délivrance du brevet:
**28.08.2019 Bulletin 2019/35**

(21) Numéro de dépôt: **16759740.0**

(22) Date de dépôt: **30.08.2016**

(51) Int Cl.:
*H05B 33/08* [(2006.01)]  *H02M 7/217* [(2006.01)]
*H02M 1/08* [(2006.01)]  *H02M 1/00* [(2006.01)]

(86) Numéro de dépôt international:
**PCT/EP2016/070395**

(87) Numéro de publication internationale:
**WO 2017/037050 (09.03.2017 Gazette 2017/10)**

(54) **CONVERTISSEUR ÉLECTRONIQUE ET SYSTÈME D'ÉCLAIRAGE COMPRENANT UN TEL CONVERTISSEUR**

ELEKTRONISCHER WANDLER UND BELEUCHTUNGSSYSTEM MIT SOLCH EINEM WANDLER

ELECTRONIC CONVERTER AND LIGHTING SYSTEM INCLUDING SUCH A CONVERTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.09.2015 FR 1558237**

(43) Date de publication de la demande:
**11.07.2018 Bulletin 2018/28**

(73) Titulaire: **Commissariat à l'Énergie Atomique et aux Énergies Alternatives 75015 Paris (FR)**

(72) Inventeurs:
- **PERICHON, Pierre 38500 Voiron (FR)**
- **LADHARI, Othman 38600 Fontaine (FR)**
- **STERNA, Léo 38100 Grenoble (FR)**

(74) Mandataire: **Cabinet Camus Lebkiri 25 rue de Maubeuge 75009 Paris (FR)**

(56) Documents cités:
WO-A1-2012/172472  WO-A1-2014/108964
WO-A2-2008/044120  US-A1- 2012 104 972
US-B1- 8 076 920

- TOMM F L ET AL: "HID Lamp Electronic Ballast Based on Chopper Converters", IEEE TRANSACTIONS ON INDUSTRIAL ELECTRONICS, IEEE SERVICE CENTER, PISCATAWAY, NJ, USA, vol. 59, no. 4, 1 April 2012 (2012-04-01), pages 1799-1807, XP011478688, ISSN: 0278-0046, DOI: 10.1109/TIE.2011.2134061
- AHMED HAFIZ FURQAN ET AL: "A high frequency isolated single-phase impedance-source ac-ac converter", 2015 9TH INTERNATIONAL CONFERENCE ON POWER ELECTRONICS AND ECCE ASIA (ICPE-ECCE ASIA), KOREAN INSTITUTE OF POWER ELECTRONICS, 1 June 2015 (2015-06-01), pages 2359-2364, XP033184441, DOI: 10.1109/ICPE.2015.7168099 [retrieved on 2015-07-27]
- SEIFI NAJMI E ET AL: "Discontinuous Energy Pump Source AC/AC converters", POWER ELECTRONICS, DRIVE SYSTEMS AND TECHNOLOGIES CONFERENCE (PEDSTC), 2013 4TH, IEEE, 13 February 2013 (2013-02-13), pages 401-406, XP032397372, DOI: 10.1109/PEDSTC.2013.6506741 ISBN: 978-1-4673-4481-4

**Description**

**DOMAINE TECHNIQUE**

La présente invention concerne un convertisseur électronique trouvant une application particulièrement avantageuse dans les systèmes d'éclairage alimentés en courant continu, tels qu'une lampe à diode électroluminescente.

**ÉTAT DE LA TECHNIQUE**

Dans le domaine de l'éclairage, les lampes à diode électroluminescente (LED) se substituent de plus en plus aux lampes à incandescence halogène et aux lampes fluorescentes, en raison d'une consommation électrique plus faible et d'une durée de vie plus élevée. Les lampes à LED ne peuvent cependant fonctionner à la tension du secteur, c'est-à-dire à la tension alternative fournie par le réseau de distribution électrique, à la différence des deux autres technologies de lampe. Elles doivent en effet être alimentées en courant continu (DC).

A cet effet, un circuit électronique appelé communément « driver » est disposé entre le réseau électrique et la charge de la lampe, constituée d'une ou plusieurs LED. La fonction principale du driver est de convertir la tension alternative du réseau électrique en une tension continue pour alimenter les LED. Le driver protège en outre les LED contre les surtensions du réseau, en régulant le courant électrique dans les LED. Il se présente généralement sous la forme d'une carte électronique intégrée dans le culot de l'ampoule ou déportée dans un boîtier externe.

Les contraintes qui pèsent sur le driver sont nombreuses. En plus d'un bon rendement de conversion, le driver doit avoir une durée de vie au moins égale à celle des LED. Il doit en outre limiter l'effet de « papillotement » des LED (« flicker » en anglais), c'est-à-dire les fluctuations du flux lumineux, cet effet étant responsable d'un inconfort visuel important. Cela exige une grande stabilité dans le courant des LED. Enfin, il doit être peu encombrant pour être intégré dans le culot de l'ampoule.

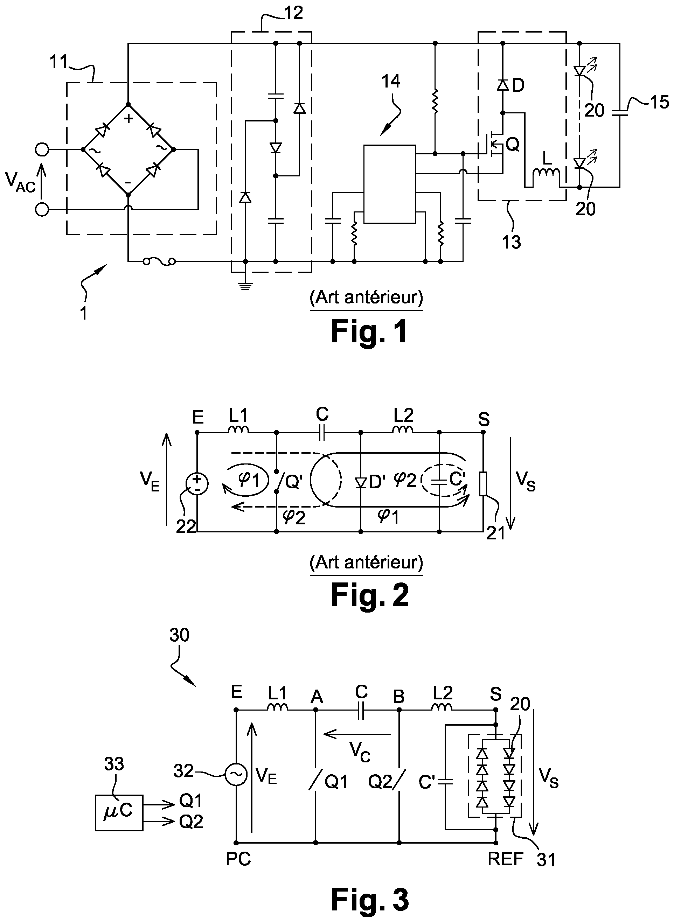

La figure 1 est un schéma électrique d'un driver de LED 10 classique. Ce driver 10 comprend plusieurs étages de conversion successifs :

- un convertisseur AC-DC 11 formé d'un pont redresseur à diodes, permettant de générer une tension sensiblement continue à partir d'une tension alternative d'entrée $V_{AC}$ ;
- un doubleur de tension 12, câblé ou non selon l'amplitude de la tension alternative d'entrée $V_{AC}$ (par exemple 115 V ou 230 V) ;
- un convertisseur DC-DC 13 abaisseur de tension comprenant une diode D, une bobine de stockage L et un transistor MOSFET Q piloté par un contrôleur 14 ; et
- un condensateur de filtrage 15 connecté en parallèle des LED 20.

Le condensateur de filtrage 15, de type électrochimique, « lisse » la tension aux bornes des LED 20, afin de réduire les variations de courant à l'origine de l'effet de papillotement. Ce condensateur est indispensable car les LED ont, contrairement à d'autres sources de lumière, une très faible rémanence. Le flux lumineux produit par les LED n'est donc pas intrinsèquement lissé.

Les composants passifs utilisés dans ce driver sont de fortes valeurs, en particulier la bobine L (typiquement 2 mH), le condensateur 15 (4,7 μF) et les condensateurs appartenant au doubleur de tension 12 (68 μF). Ils sont par conséquent volumineux et occupent une place importante sur la carte électronique, ce qui rend difficile l'intégration du driver 10 dans le culot d'une ampoule.

Par ailleurs, comme le rendement de conversion de ce circuit est diminué par la multiplication des étages de conversion, le driver 10 dissipe une quantité non-négligeable d'énergie et a tendance à chauffer. Lorsqu'en outre le driver est intégré, l'augmentation de la température est accentuée par la proximité immédiate des LED et son refroidissement est rendu difficile par le manque de place dans le culot de l'ampoule. Les composants passifs fonctionnent alors à une température élevée et vieillissent plus rapidement, en particulier le condensateur électrochimique 15.

Ainsi, le driver 10 représenté à la figure 1 est encombrant et peu fiable. Sa durée de vie est souvent plus faible que celle des LED 20, ce qui oblige à le remplacer.

La figure 2 montre le schéma électrique d'un convertisseur DC-DC connu par ailleurs : le convertisseur « Ćuk ». Ce type de convertisseur sert à alimenter une charge bipolaire 21 en courant continu à partir d'une source de tension 22, également continue. Sa particularité est qu'il fournit en sortie, i.e. aux bornes de la charge 21, une tension continue Vs de plus faible ou de plus grande valeur que la tension d'entrée Ve fournie par la source 22.

Ce convertisseur comprend une inductance d'entrée L1 connectée à une première borne E de la source de tension continue 22, une inductance de sortie L2 connectée à une première borne S de la charge 21 et une capacité de stockage C connectée entre les inductances L1-L2. La charge 21 et la source de tension 22 sont directement reliées par l'intermédiaire de leur deuxième borne.

Le convertisseur Ćuk comprend en outre un interrupteur Q', en général un transistor MOSFET de puissance, une diode D' et une capacité de lissage C'. L'interrupteur Q' comprend une première extrémité connectée entre l'inductance d'entrée L1 et la capacité de stockage C, et une deuxième extrémité connectée aux deuxièmes bornes de la charge 21 et de la source de tension 22. L'anode de la diode D' est connectée entre la capacité de stockage C et l'inductance de sortie L2, tandis que sa cathode est connectée aux deuxièmes bornes de la charge 21 et de la source de tension 22. Enfin, la capacité de lissage C'est connectée en parallèle de la charge 21.

Le fonctionnement du convertisseur Ćuk est le suivant.

Lors d'une première phase de fonctionnement φ1, l'interrupteur Q' est fermé et la diode D', polarisée en inverse à cause de la capacité C préalablement chargée, est bloquée. La source de tension 22 charge l'inductance d'entrée L1. Simultanément, la capacité C se décharge à travers l'interrupteur Q', la charge 21 et l'inductance L2, qui se charge. Ainsi, lors de cette première phase, l'inductance d'entrée L1 est chargée et la charge de la capacité de stockage C est transférée dans l'inductance de sortie L2. Lors d'une seconde phase de fonctionnement φ2, l'interrupteur Q' est ouvert et la diode D' est désormais passante. La charge de l'inductance d'entrée L1 est transférée dans la capacité de stockage C et l'inductance de sortie L2 se décharge à travers la diode D' en alimentant la charge 21.

Les phases φ1 et φ2 s'enchainent ainsi de façon cyclique, au rythme fixé par la commande de l'interrupteur Q'. La commande de l'interrupteur Q' détermine le comportement du convertisseur, abaisseur de tension ou un élévateur de tension. En effet, la valeur de la tension de sortie Vs peut être réglée en modifiant le rapport cyclique, c'est-à-dire la durée de la première phase de fonctionnement sur la durée totale d'un cycle.

Le convertisseur Cuk est un convertisseur DC-DC. Il ne peut donc servir d'interface entre une source de tension alternative (AC) et une charge constituée de LED, comme le driver de la figure 1.

Les documents US 2012/104972 A1, US 8 076 920 B1 et WO 2012/172472 A1 divulguent des convertisseurs AC/DC connus qui sont utilisés dans des systèmes d'éclairages. Ces convertisseurs comportent un pont redresseur à diodes afin de rectifier la tension d'entrée. Dans l'art antérieur il y a aussi des convertisseurs AC/AC de type Cuk où la tension d'entrée est connectée à un interrupteur bidirectionnel. Certains exemples sont les documents suivants: Tomm F L et al: "HID Lamp Electronic Ballast Based on Chopper Converters"; Ahmed Hafiz Furqan et al: "A high frequency isolated single-phase impedance-source ac-ac converter"; et Seifi Najmi E et al: "Discontinuous Energy Pump Source AC/AC converters".

## RÉSUMÉ DE L'INVENTION

Il existe un besoin de prévoir un convertisseur électronique compact et fiable, capable d'alimenter en courant continu une charge connectée entre une borne de sortie et une borne de référence du convertisseur, à partir d'une source de tension alternative connectée entre une borne d'entrée et une borne commune du convertisseur.

Selon un premier aspect de l'invention, on tend à satisfaire ce besoin en prévoyant un convertisseur électronique comprenant les éléments suivants :

- une inductance d'entrée ayant une première extrémité connectée à la borne d'entrée de manière à recevoir la tension alternative ;
- une inductance de sortie connectée à la borne de sortie ;
- une capacité de stockage disposée entre l'inductance d'entrée et l'inductance de sortie ;

- un circuit de découpage configuré pour :

  ○ dans un premier état de fonctionnement, charger l'inductance d'entrée grâce à la source de tension alternative et décharger la capacité de stockage dans l'inductance de sortie en alimentant la charge ;
  ○ dans un deuxième état de fonctionnement, décharger l'inductance d'entrée dans la capacité de stockage et décharger l'inductance de sortie en alimentant la charge ;

  le circuit de découpage comprenant un premier interrupteur bidirectionnel en tension et en courant, ayant une première extrémité connectée à une deuxième extrémité de l'inductance d'entrée et une deuxième extrémité connectée à la borne commune ; et
- un dispositif de commande du circuit de découpage, configuré pour activer, lors de chacune des alternances positives et négatives, des cycles successifs de fonctionnement à une deuxième fréquence supérieure à la fréquence de la tension alternative, chaque cycle de fonctionnement étant constitué du premier état de fonctionnement et du deuxième état de fonctionnement, le premier état de fonctionnement ayant un rapport cyclique qui varie de façon à obtenir une tension de sortie constante entre la borne de sortie et la borne de référence lors de chacune des alternances positives et négatives.

Etant donné sa composition et ses deux phases de fonctionnement à haute fréquence, le convertisseur électronique selon l'invention ressemble à un convertisseur classique de type Cuk. Toutefois, à la différence de celui-ci, il s'accorde en entrée avec une source de tension alternative (AC), par exemple le réseau de distribution électrique. En faisant varier la durée de la première phase de fonctionnement aux cours des cycles successifs de fonctionnement (autrement dit le rapport cyclique), on peut compenser les variations de la tension alternative d'entrée pour fournir, lors de chaque alternance de la tension d'entrée, une tension constante en sortie. Ainsi, le convertisseur électronique a tantôt un comportement élévateur de tension, tantôt un comportement abaisseur de tension, selon que la tension alternative d'entrée est inférieure ou supérieure au niveau de tension désiré en sortie.

Grâce à cette commande particulière du circuit de découpage, le courant qui circule dans la charge est stable lors de chaque alternance de la tension d'entrée. Pour cette raison, le convertisseur selon l'invention est parfaitement adapté à l'alimentation d'une ou plusieurs diodes électroluminescentes (LED). Il permet de minimiser l'effet de papillotement des LED et peut donc constituer un driver de lampe à LED performant.

Il n'est plus indispensable de prévoir un condensateur de filtrage de forte valeur pour lisser les variations de courant, ce lissage étant directement obtenu par la commande du circuit de découpage. En outre, comme ce convertisseur fonctionne en commutation à une fréquence (dite de découpage) bien supérieure à la fréquence de la tension alternative, les composants passifs qu'il comporte peuvent être de faible valeur et donc de petite taille. Cela permet d'intégrer le convertisseur dans des espaces réduits, tels que le culot d'une ampoule.

En plus d'être compact, le convertisseur selon l'invention dispose d'un rendement supérieur à celui des convertisseurs AC-DC de l'art antérieur. Cela est dû au fait qu'il n'y a qu'un seul étage de conversion. En particulier, le pont redresseur à diodes, responsable de pertes importantes dans les circuits de l'art antérieur, est supprimé. Les pertes dans les composants passifs, moins nombreux et de plus petites valeurs, sont faibles et les composants actifs appartenant au circuit de découpage dissipent peu d'énergie lorsqu'ils commutent. Par conséquent, le convertisseur chauffe peu et sa durée de vie est grande.

Avantageusement, le circuit de découpage est en outre configuré pour connecter l'inductance d'entrée et la capacité de stockage en série avec la source de tension alternative dans un troisième état de fonctionnement, et le dispositif de commande est en outre configuré pour activer le troisième état de fonctionnement à chaque transition entre les alternances positives et négatives. Ce troisième état de fonctionnement permet d'inverser la tension aux bornes de la capacité de stockage lorsque la tension alternative change de signe. On réduit ainsi le risque de surtensions et les pertes électriques dans le convertisseur électronique.

De préférence, le troisième état de fonctionnement débute sensiblement à un premier instant de passage à zéro de la tension alternative et prend fin à un deuxième instant lorsque la tension mesurée aux bornes de la capacité de stockage atteint une valeur de signe opposé à celle mesurée au premier instant. La tension aux bornes de la capacité de stockage peut être mesurée par le dispositif de commande du circuit de découpage.

Selon un premier mode de réalisation du convertisseur selon l'invention, la deuxième extrémité de l'inductance d'entrée est connectée à une première électrode de la capacité de stockage, l'inductance de sortie comprend une première extrémité et une deuxième extrémité connectée à la borne de sortie, et le circuit de découplage comprend en outre un pont redresseur commandé de type Graetz ayant une entrée connectée entre une deuxième électrode de la capacité de stockage et la borne commune, et une sortie connectée entre la borne de référence et la première extrémité de l'inductance de sortie.

La charge associée à ce premier mode de réalisation du convertisseur est avantageusement munie d'une série de LED, la borne de sortie du convertisseur constituant un point d'entrée du courant dans la série de LED.

De préférence, le pont redresseur commandé de type Graetz comporte quatre composants dont au moins deux transistors, avantageusement des transistors HEMT à base de nitrure de gallium. Il comporte par exemple :

- une première diode ayant une cathode connectée à la deuxième électrode de la capacité de stockage et une anode connectée à la borne de référence ;
- un premier transistor ayant une première extrémité connectée à la borne de référence et une deuxième extrémité connectée à la borne commune ;
- une deuxième diode ayant une anode connectée à la deuxième électrode de la capacité de stockage et une cathode connectée à la première extrémité de l'inductance de sortie ; et
- un deuxième transistor ayant une première extrémité connectée à la première extrémité de l'inductance de sortie et une deuxième extrémité connectée à la borne commune.

Selon un deuxième mode de réalisation du convertisseur selon l'invention, la borne de référence est connectée à la borne commune, la deuxième extrémité de l'inductance d'entrée est connectée à une première électrode de la capacité de stockage, l'inductance de sortie comprend une première extrémité connectée à une deuxième électrode de la capacité de stockage et une deuxième extrémité connectée à la borne de sortie, et le circuit de découplage comprend en outre un deuxième interrupteur bidirectionnel ayant une première extrémité connectée à la première extrémité de l'inductance de sortie et une deuxième extrémité connectée à la borne commune.

La charge associée à ce deuxième mode de réalisation du convertisseur est avantageusement constituée de deux séries de LED connectées en antiparallèle.

Le convertisseur selon l'invention peut également présenter une ou plusieurs des caractéristiques ci-dessous, considérées individuellement ou selon toutes les combinaisons techniquement possibles :

- le dispositif de commande est configuré pour faire varier le rapport cyclique selon des sens de variation identiques à ceux de la tension alternative lors de chaque alternance négative et selon des sens de variation opposés à ceux de la tension alternative lors de chaque alternance positive ;
- le dispositif de commande est configuré pour faire varier le rapport cyclique de façon périodique à une troisième fréquence égale au double de la première fréquence ;
- le premier interrupteur bidirectionnel est commandé successivement en ouverture et en fermeture par le dispositif de commande lors de chacune des alternances positives et négatives ;
- le premier interrupteur bidirectionnel est commandé en ouverture par le dispositif de commande à chaque transition entre les alternances positives et négatives ;
- le premier transistor du pont redresseur commandé de type Graetz est commandé par le dispositif de commande en ouverture lors de chacune des alternances positives et en fermeture lors de chacune des alternances négatives ;
- le deuxième transistor du pont redresseur commandé de type Graetz est commandé par le dispositif de commande en fermeture lors de chacune des alternances positives et en ouverture lors de chacune des alternances négatives ;
- le deuxième interrupteur bidirectionnel est configuré pour commuter spontanément entre ouverture et fermeture lors de chacune des alternances positives et négatives ;
- le deuxième interrupteur bidirectionnel est commandé en fermeture par le dispositif de commande à chaque transition entre les alternances positives et négatives ;
- le premier interrupteur bidirectionnel comporte des premier et deuxième transistors montés en série tête-bêche et commandés par un seul et même signal issu du dispositif de commande ;
- les premier et deuxième transistors du premier interrupteur bidirectionnel sont des transistors HEMT à base de nitrure de gallium ;
- le deuxième interrupteur bidirectionnel comprend des première et deuxième branches connectées en parallèle, la première branche comprenant un premier transistor et une première diode connectés en série, la deuxième branche comprenant un deuxième transistor et une deuxième diode connectés en série, les première et deuxième diodes étant montées dans des sens contraires ; et
- les premier et deuxième transistors du deuxième interrupteur bidirectionnel sont des transistors HEMT à base de nitrure de gallium.

Un deuxième aspect de l'invention concerne un système d'éclairage comprenant le convertisseur électronique selon l'invention et une charge munie d'au moins une LED, la charge étant connectée entre la borne de sortie et la borne de référence du convertisseur électronique.

**BRÈVE DESCRIPTION DES FIGURES**

D'autres caractéristiques et avantages de l'invention ressortiront clairement de la description qui en est donnée ci-dessous, à titre indicatif et nullement limitatif, en référence aux figures annexées, parmi lesquelles :

- la figure 1, précédemment décrite, représente schématiquement un driver de LED selon l'art antérieur ;
- la figure 2, précédemment décrite, représente schématiquement un convertisseur DC-DC selon l'art antérieur ;
- la figure 3 représente schématiquement un premier mode de réalisation de convertisseur électronique AC-DC selon l'invention ;
- les figures 4A et 4B représentent deux phases de fonctionnement du convertisseur électronique selon la figure 3 ;
- la figure 5 est un chronogramme représentant des signaux d'entrée et sortie du convertisseur électronique selon la figure 3 ;
- la figure 6A représente un exemple de réalisation d'un premier interrupteur bidirectionnel appartenant au convertisseur électronique de la figure 3 ;
- la figure 6B représente un mode de réalisation préférentiel d'un deuxième interrupteur bidirectionnel appartenant au convertisseur électronique de la figure 3 ;
- la figure 7 est un chronogramme représentant la commande des interrupteurs bidirectionnels des figures 6A et 6B, lors d'une alternance positive et d'une alternance négative de la tension d'entrée ;
- la figure 8A est un schéma électrique équivalent du convertisseur électronique selon la figure 3, lors d'une alternance positive de la tension d'entrée ;

- la figure 8B est un schéma électrique équivalent du convertisseur électronique selon la figure 3, lors d'une alternance négative de la tension d'entrée ;
- la figure 9 est une portion de chronogramme montrant le comportement du convertisseur électronique, lors des transitions entre les alternances positives et négatives de la tension d'entrée ;
- la figure 10 représente schématiquement un deuxième mode de réalisation de convertisseur électronique AC-DC selon l'invention ;
- les figures 11A et 11B représentent deux phases de fonctionnement du convertisseur électronique selon la figure 10, lors d'une alternance positive de la tension d'entrée ; et
- les figures 12A et 12B représentent les deux mêmes phases de fonctionnement du convertisseur électronique selon la figure 10, lors d'une alternance négative de la tension d'entrée.

Pour plus de clarté, les éléments identiques ou similaires sont repérés par des signes de références identiques sur l'ensemble des figures.

## DESCRIPTION DÉTAILLÉE D'AU MOINS UN MODE DE RÉALISATION

La figure 3 montre le schéma électrique d'un convertisseur électronique 30 selon un premier mode de réalisation de l'invention. Ce convertisseur 30 permet d'alimenter en énergie une charge bidirectionnelle 31 à partir d'une source 32 de tension alternative (AC).

La charge bidirectionnelle 31 est connectée entre une borne de sortie S et une borne de référence REF du convertisseur 30. Elle comporte par exemple deux branches connectées en parallèle, chaque branche comprenant une pluralité de LED 20 connectées en série. Dans chaque branche, les LED 20 sont toutes orientées dans le même sens. La charge est dite bidirectionnelle, car les deux branches sont parcourues (successivement) par des courants de sens opposés. Autrement dit, les deux séries de LED sont montées en antiparallèle. De préférence, les deux branches de la charge bidirectionnelle 31 contiennent le même nombre de LED et possèdent le même rendement lumineux.

La source de tension alternative 32, par exemple un réseau de distribution électrique au sein d'un logement individuel, est connectée entre une borne d'entrée E et une borne commune PC du convertisseur 30. La borne commune PC, appelée également point commun, sert de référence à plusieurs composants du convertisseur 30 décrits ci-après. En outre, dans ce mode de réalisation du convertisseur, la borne REF (à laquelle se connecte la charge 31) et la borne PC (à laquelle se connecte la source 32) sont reliées électriquement, de façon à être soumises au même potentiel. La tension alternative $V_E$ fournie par la source 32 est, de préférence, une tension sinusoïdale. A titre d'exemple, sa fréquence est de 50 Hz et son amplitude est de 325 V (230 V en valeur efficace).

Le convertisseur 30 comporte une inductance d'entrée L1 connectée à la source de tension 32, une inductance de sortie L2 connectée à la charge 31 et une capacité de stockage C connectée entre les inductances L1 et L2. Plus particulièrement, l'inductance d'entrée L1 comprend une première extrémité connectée à la borne d'entrée E du convertisseur, de façon à recevoir la tension alternative d'entrée, et une deuxième extrémité connectée à une première électrode de la capacité C. L'inductance de sortie L2 comprend une première extrémité connectée à une deuxième électrode de la capacité C et une deuxième extrémité connectée à la borne de sortie S du convertisseur. Ainsi, si l'on considère uniquement ces trois premiers éléments, l'inductance d'entrée L1, la capacité C et l'inductance de sortie L2 sont connectées en série entre la borne d'entrée E et la borne de sortie S.

Le convertisseur 30 comporte en outre deux interrupteurs Q1 et Q2 bidirectionnels en courant et en tension. Le premier interrupteur bidirectionnel Q1 comprend une première extrémité connectée à un point A situé entre l'inductance d'entrée L1 et la capacité de stockage C, et une deuxième extrémité connectée à la borne commune PC du convertisseur. Ainsi, le point A constitue dans le schéma électrique de la figure 3 un noeud où se rejoignent la deuxième extrémité de l'inductance d'entrée L1, la première électrode de la capacité C et la première extrémité de l'interrupteur Q1. Le deuxième interrupteur bidirectionnel Q2 comprend une première extrémité connectée à un point B situé entre la capacité de stockage C et l'inductance de sortie L2, et une deuxième extrémité connectée également à la borne commune PC. Le point B constitue donc un noeud où se rejoignent la deuxième électrode de la capacité C, la première extrémité de l'inductance de sortie L2 et la première extrémité de l'interrupteur Q2.

Comme tout interrupteur, chacun des interrupteurs bidirectionnels Q1 ou Q2 peut basculer entre un état passant, où la tension à ses bornes est nulle, et un état bloqué, où aucun courant ne traverse l'interrupteur. Un interrupteur est dit bidirectionnel en courant et en tension lorsqu'il peut supporter des tensions positives et négatives au blocage et conduire des courants positifs et négatifs à l'état passant. On parle également d'interrupteurs à quatre quadrants.

Les interrupteurs Q1 et Q2 constituent un circuit de découpage, qui découpe ou « hache » la tension alternative d'entrée $V_E$ à une fréquence fixe, appelée fréquence de découpage. Ils sont commandés successivement en ouverture et en fermeture, i.e. dans l'état bloqué et dans l'état passant respectivement, par un dispositif de commande 33, par exemple un microcontrôleur.

Les interrupteurs Q1 et Q2 du convertisseur 30 sont constamment commandés de façon complémentaire, c'est-à-dire en opposition de phase. Lorsque l'interrupteur Q1 est ouvert, l'interrupteur Q2 est fermé, et inversement. On distingue alors deux phases de fonctionnement du convertisseur correspondant à deux états distincts du circuit de découpage.

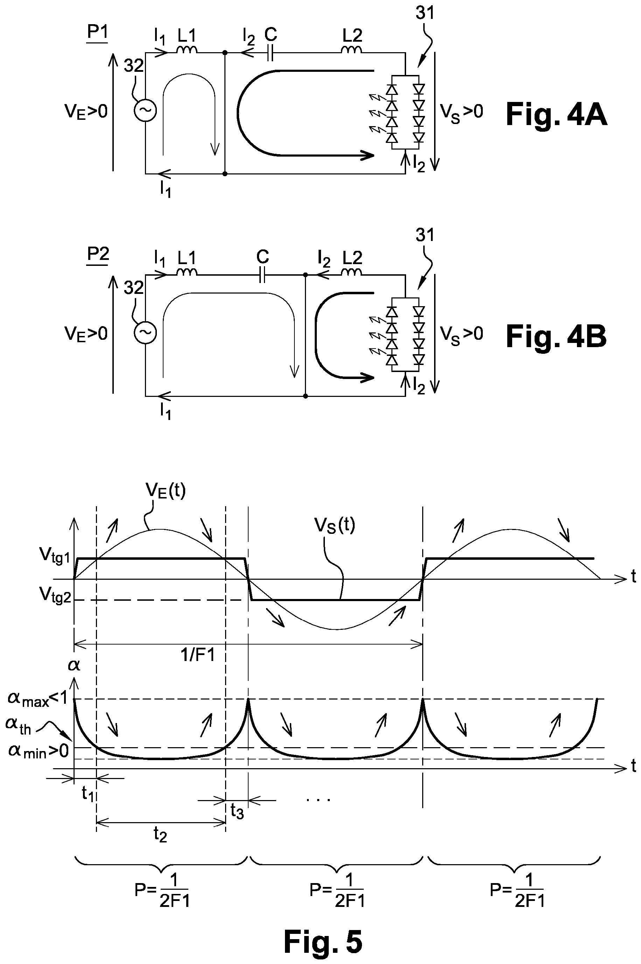

Les figures 4A et 4B représentent schématiquement ces deux phases de fonctionnement P1 et P2.

Lors de la première phase de fonctionnement P1, représentée à la figure 4A, le premier interrupteur bidirectionnel Q1 est fermé (il est donc équivalent à un fil) et le deuxième interrupteur bidirectionnel Q2 est ouvert (il est donc équivalent à un circuit ouvert). Cela a pour effet de connecter l'inductance d'entrée L1 en série avec la source de tension alternative 32. L'inductance d'entrée L1 est alors parcourue par un courant $I_1$ issu de la source 32 et stocke de l'énergie (sous forme magnétique). Par ailleurs, la capacité de stockage C est connectée en série avec la charge 31 et l'inductance de sortie L2. La capacité C, préalablement chargée, se décharge dans l'inductance de sortie L2, générant un courant $I_2$ qui alimente la charge 31.

Dans la deuxième phase de fonctionnement P2 (Fig.4B), la configuration des interrupteurs bidirectionnels Q1 et Q2 est inversée. Le premier interrupteur Q1 est ouvert et le deuxième interrupteur Q2 est fermé. On forme ainsi une première boucle dans laquelle l'inductance d'entrée L1 et la capacité de stockage C sont parcourues par le courant $I_1$ provenant de la source 32 et la charge de l'inductance d'entrée L1 est transférée dans la capacité C. Dans une deuxième boucle, l'inductance de sortie L2 se retrouve connectée en série avec la charge 31. Elle se décharge en produisant le courant $I_2$ qui alimente la charge.

On voit que, lors de chacune de ces phases P1-P2, le courant $I_2$ circule dans une seule branche de la charge 31. Lorsque la tension d'entrée alternative $V_E$ est positive, c'est-à-dire lors d'une alternance positive, le courant $I_1$ circule dans le sens horaire et le courant $I_2$ circule dans le sens antihoraire, comme cela est illustré sur les figures 4A et 4B. C'est donc la série de LED située à gauche qui est alimentée. Lors d'une alternance négative de la tension d'entrée $V_E$ ($V_E$ < 0), les courants $I_1$ et $I_2$ circulent dans l'autre sens, respectivement antihoraire et horaire. Le courant $I_2$ parcourt alors la série de LED située à droite sur les figures 4A et 4B.

Les phases de fonctionnement P1 et P2 constituent un cycle de découpage qui se reproduit de façon périodique lors de chaque alternance de la tension d'entrée $V_E$, positive ou négative. La durée d'un cycle, qui correspond à la période, est égale à la somme des durées des phases P1 et P2.

Ainsi, le découpage opéré permet de transférer de l'énergie électrique de la source de tension 32 vers la charge 31 en deux temps, d'abord de l'inductance d'entrée L1 vers la capacité de stockage C, puis de la capacité de stockage C vers la l'inductance de sortie L2. La fréquence de découpage, c'est-à-dire la fréquence des cycles de découpage, est de préférence supérieure à 10 MHz, par exemple 50 MHz. Cette fréquence élevée permet de réduire l'encombrement des inductances L1-L2 et de la capacité C, en leur choisissant des valeurs faibles, de l'ordre de 1 $\mu$H (L1=L2) et 160 pF (à 50 MHz) respectivement. Ainsi, le convertisseur 30 peut être suffisamment compact pour être intégré au culot d'une ampoule à LED.

La quantité d'énergie électrique transférée de la source de tension 32 vers la charge 31 varie selon la durée de la première phase de fonctionnement P1 dans le cycle, et donc du rapport cyclique associé à cette phase. Le rapport cyclique $\alpha$ de la première phase de fonctionnement P1 désigne le rapport de la durée de la phase P1 sur la durée totale d'un cycle. Ce rapport cyclique détermine la relation entre la tension d'entrée $V_E$ et la tension de sortie Vs du convertisseur 30, autrement dit son comportement abaisseur ou élévateur de tension. Il s'écrit de la façon suivante :

$$\alpha = \frac{T_{P1}}{T_{P1} + T_{P2}} = \frac{1}{1 + \left|\frac{V_E}{V_S}\right|} \qquad (1)$$

où $T_{P1}$ est la durée de la première phase P1 et $T_{P2}$ la durée de la deuxième phase P2.

Pour éviter l'effet de papillotement des LED, et l'inconfort visuel qui en résulte, on souhaite que le convertisseur 30 puisse fournir des courants $I_2$ de même intensité dans les deux bras de la charge bidirectionnelle 31 et que cette intensité soit constante lors de chaque alternance positive ou négative de la tension d'entrée $V_E$. Cela implique une tension $V_S$ continue aux bornes de la charge 31 lors de chaque alternance. Pour atteindre cet objectif, il est nécessaire d'après la relation (1) ci-dessus de faire varier le rapport cyclique $\alpha$ d'une certaine manière en fonction de la tension d'entrée $V_E$.

Ainsi, dans le convertisseur 30 de la figure 3, le dispositif de commande 33 des interrupteurs bidirectionnels Q1-Q2 est configuré pour moduler le rapport cyclique $\alpha$ en fonction de la tension alternative d'entrée $V_E$, de façon qu'on obtienne en sortie du convertisseur une tension Vs constante lors de chacune des alternances positives et négatives, quel que soit le niveau de la tension d'entrée $V_E$. La modulation du rapport cyclique $\alpha$ en fonction de la tension alternative d'entrée $V_E$ permet d'obtenir, lors de chacune des alternances positives et négatives, une conversion directe AC-DC par le seul biais des transferts d'énergie entre les inductances L1-L2 et la capacité de stockage C. Ces transferts d'énergie occasionnent peu de pertes, c'est pourquoi le convertisseur 30 présente un rendement meilleur que celui des convertisseurs classiques munis d'un étage redresseur de tension (en plus d'un étage abaisseur de tension).

La figure 5 illustre cette modulation particulière du rapport cyclique a, à travers des chronogrammes de la tension alternative d'entrée $V_E$, de la tension de sortie Vs et du rapport cyclique $\alpha$ (tel que défini par la relation (1) ci-dessus).

Comme décrit précédemment, le courant $I_2$ circulant dans la charge bidirectionnelle 31 change de sens selon le signe de la tension d'entrée $V_E$. La tension de sortie Vs alterne donc entre une valeur cible positive $V_{tg1}$ lors des alternances positives de la tension d'entrée $V_E$ et une valeur cible négative $V_{tg2}$ lors des alternances négatives de la tension d'entrée $V_E$. Les valeurs cible $V_{tg1}$ et $V_{tg2}$ de la tension de sortie sont comprises entre les valeurs maximale et minimale de la tension alternative d'entrée $V_E$.

Dans un mode de réalisation préférentiel du convertisseur, destiné par exemple à un système d'éclairage par des LED, les valeurs cible $V_{tg1}$ et $V_{tg2}$ de la tension de sortie sont égales en valeurs absolues. Le rapport cyclique $\alpha$ est alors un signal périodique ayant une fréquence deux fois plus élevée que la fréquence F1 de la tension alternative d'entrée $V_E$. Autrement dit, à chaque période P du rapport cyclique $\alpha$ correspond une alternance de la tension d'entrée, positive ou négative.

A la différence de la tension d'entrée $V_E$, le rapport cyclique $\alpha$ n'alterne pas entre valeurs positives et valeurs négatives. Il évolue entre une valeur minimale $\alpha_{min}$ et une valeur maximale $\alpha_{max}$, toutes les deux comprises entre 0 et 1 ($\alpha_{min} < \alpha_{max}$). Le rapport cyclique présente une valeur seuil $\alpha_{th}$ représentant la limite entre les comportements élévateur et abaisseur de tension du convertisseur 30. Une valeur inférieure au seuil $\alpha_{th}$ ($\alpha_{min} < \alpha_{th} < \alpha_{max}$) signifie que le convertisseur a un comportement de type abaisseur de tension, alors qu'une valeur supérieure au seuil $\alpha_{th}$ implique un comportement de type élévateur de tension. En outre, plus la valeur du rapport cyclique $\alpha$ est proche du seuil $\alpha_{th}$, moins la tension est abaissée ou augmentée de façon importante.

Comme cela est illustré sur la figure 5, le rapport cyclique $\alpha$ prend des valeurs parfois supérieures au seuil $\alpha_{th}$, parfois inférieures. Cela permet au convertisseur de compenser en permanence les variations de la tension d'entrée $V_E$ par rapport aux valeurs cible $V_{tg1}$ et $V_{tg2}$ de la tension de sortie. Le convertisseur présente alors soit un comportement élévateur de tension, soit un comportement abaisseur de tension, selon la valeur de la tension d'entrée $V_E$.

Chaque période P du rapport cyclique $\alpha$ peut être décomposée en trois intervalles de temps $t_1$ à $t_3$. Pendant l'intervalle de temps $t_1$, la tension d'entrée $V_E$ est (en valeur absolue) inférieure au niveau de tension $V_{tg1}/V_{tg2}$ (selon l'alternance considérée) souhaité en sortie. Le rapport cyclique $\alpha$ prend alors une valeur correspondant à un comportement élévateur de tension ($\alpha > \alpha_{th}$). Compte tenu que l'écart entre la tension d'entrée $V_E$ et le niveau de sortie $V_{tg1}/V_{tg2}$ tend à diminuer au cours de l'intervalle de temps $t_1$, le rapport cyclique $\alpha$ diminue pour se rapprocher du seuil $\alpha_{th}$. Lorsque, au début de l'intervalle de temps $t_2$, la tension d'entrée $V_E$ devient supérieure (en valeur absolue) au niveau de tension $V_{tg1}/V_{tg2}$, le rapport cyclique $\alpha$ diminue en dessous du seuil de tension $\alpha_{th}$ afin de fonctionner en mode abaisseur. Au milieu de la période P, la valeur minimale $\alpha_{min}$ du rapport cyclique est atteinte car l'écart entre les tensions $V_E$ et Vs est maximal. Ensuite, l'écart se réduisant, le rapport cyclique $\alpha$ augmente jusqu'à passer au-dessus du seuil $\alpha_{th}$. En effet, lors de l'intervalle de temps $t_3$, la tension d'entrée $V_E$ est de nouveau inférieure au niveau de tension $V_{tg1}/V_{tg2}$. Le rapport cyclique $\alpha$ retrouve sa valeur maximale et initiale $\alpha_{max}$, lorsque la tension d'entrée $V_E$ redevient nulle.

La figure 5 montre que le rapport cyclique $\alpha$ ainsi modulé possède des sens de variation opposés à ceux de la tension d'entrée $V_E$ lors de chaque alternance positive, et des sens de variations identiques à ceux de la tension d'entrée $V_E$ lors de chaque alternance négative. En d'autres termes, le rapport cyclique $\alpha$ évolue en opposition de phase avec la tension d'entrée $V_E$ lors de chaque alternance positive et en phase avec la tension d'entrée $V_E$ lors de chaque alternance négative.

Immédiatement avant et immédiatement après chaque transition entre une alternance positive et une alternance négative de la tension d'entrée $V_E$, c'est-à-dire à la toute fin et au tout début d'une période P, la pente du rapport cyclique $\alpha$ est avantageusement plus importante qu'au milieu de la période P afin que la tension de sortie $V_S$ passe plus rapidement du niveau $V_{tg1}$ au niveau $V_{tg2}$, ou inversement. Ainsi, on réduit la durée de transition entre les deux branches de la charge bidirectionnelle, i.e. le temps que met le courant $I_2$ à s'inverser. En outre, au démarrage du convertisseur, la valeur initiale du rapport cyclique $\alpha$ peut être égale à 1, et donc supérieure aux valeurs atteintes ensuite à la fin de chaque période P, de façon à apporter l'énergie nécessaire aux transferts d'énergie.

Le convertisseur électronique selon l'invention peut aussi convenir à d'autres applications que l'éclairage avec un niveau de luminosité constant. En effet, en faisant varier la valeur minimale $\alpha_{min}$ et/ou la valeur maximale $\alpha_{max}$ du rapport cyclique $\alpha$ à chaque période de la tension d'entrée $V_E$, on peut obtenir différentes valeurs de tension $V_S$ en sortie, et donc différents niveaux de courant dans la charge. Le rapport cyclique $\alpha$ peut alors présenter une fréquence égale à la fréquence de la tension d'entrée $V_E$, voire ne pas être périodique si les niveaux de tension choisis sont constamment modifiés. A titre d'exemple, le convertisseur peut servir de variateur de vitesse pour moteur asynchrone monophasé.

Le rapport cyclique $\alpha$ peut aussi varier à des fréquences plus élevées, en raison notamment de l'instabilité de la tension d'entrée (dans le cas d'un réseau électrique de distribution notamment) ou à de l'instabilité de la charge.

Lors de chacune des alternances positives et négatives de la tension d'entrée $V_E$, les cycles successifs de découpage (phases de fonctionnement P1-P2) sont générés en activant de façon complémentaire les interrupteurs bidirectionnels Q1 et Q2. Or une complémentarité parfaite entre les interrupteurs bidirectionnels Q1-Q2 est difficilement atteignable si les deux interrupteurs sont identiques et commandés de la même façon. Il arrive par exemple, pendant de brefs instants appelés « temps morts », que les deux interrupteurs Q1-Q2 soient ouverts simultanément. Ces temps morts sont préjudiciables pour le fonctionnement du convertisseur. En effet, lorsque les interrupteurs Q1-Q2 sont tous les deux ouverts, la charge 31 est directement reliée à la source de tension 32 par l'intermédiaire des inductances L1-L2 et de la capacité de stockage C (cf. Fig.3). Des surtensions peuvent alors se produire aux bornes de la charge 31 et des interrupteurs Q1-Q2, ce qui risque de les endommager.

La situation inverse où les deux interrupteurs bidirectionnels Q1-Q2 sont fermés en même temps est également problématique, car la capacité de stockage C est alors court-circuitée, ce qui provoque sa décharge. Des pertes importantes d'énergie sont alors occasionnées.

Les interrupteurs bidirectionnels Q1 et Q2 sont avantageusement conçus et/ou polarisés différemment pour éviter de tels dysfonctionnements du convertisseur 30. De préférence, le premier interrupteur Q1 est piloté par le dispositif de commande 33, alors que le deuxième interrupteur bidirectionnel Q2 est configuré pour commuter spontanément entre l'ouverture et la fermeture.

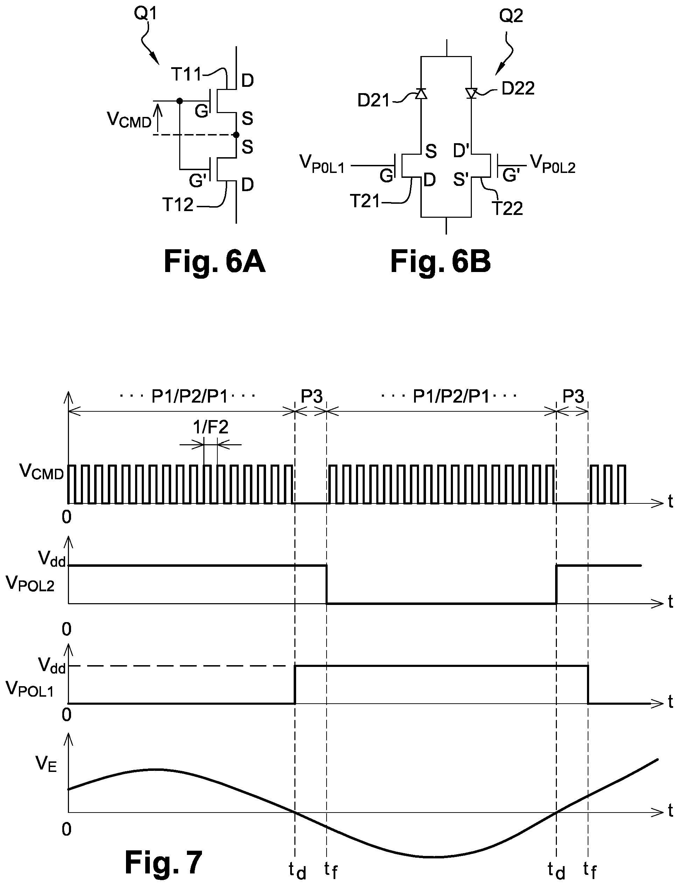

Le premier interrupteur bidirectionnel Q1, représenté par la figure 6A, comporte par exemple deux transistors de puissance T11-T12 de type NMOS montés en série tête-bêche. L'électrode de source S du transistor T11 est connectée à l'électrode de source S' du transistor T12. Un signal $V_{CMD}$ issu du dispositif de commande est appliqué simultanément sur l'électrode de grille G du transistor T11 et l'électrode de grille G' du transistor T12, car celles-ci sont interconnectées à l'instar des électrodes de source S et S'. Le signal de commande $V_{CMD}$ cadence les phases de fonctionnement P1-P2, en ouvrant et fermant successivement le premier interrupteur bidirectionnel Q1. Le signal de commande $V_{CMD}$ est de préférence un signal rectangulaire dont le rapport cyclique $\alpha$ varie comme représenté sur la figure 5.

Dans un mode de réalisation préférentiel représenté par la figure 6B, le deuxième interrupteur bidirectionnel Q2 comprend deux transistors de puissance T21-T22 de type NMOS et deux diodes D11-D22 repartis en deux branches connectées en parallèle. Chacun des transistors est monté en série avec une diode pour constituer une branche de l'interrupteur Q2.

Les transistors T21 et T22 d'une part, et les diodes D21-D22 d'autre part, sont orientés dans des sens contraires, afin que des courants ($I_2$) de sens opposés puissent parcourir successivement les deux branches du deuxième interrupteur Q2. Par exemple, l'électrode de source S du transistor T21 est connectée à l'anode de la diode D21, alors que l'électrode de drain D' du transistor T22 est connectée à la cathode de la diode D22. La cathode de la diode D21 est alors connectée à l'anode de la diode D22, tandis que l'électrode de drain D du transistor T21 est relié à l'électrode de source S' du transistor T22.

Le deuxième interrupteur bidirectionnel Q2 peut ainsi supporter l'une des quatre combinaisons possibles de courant et tension, comme le premier interrupteur Q1. Toutefois, contrairement aux transistors T11-T22 de ce dernier, les transistors T21 et T22 de l'interrupteur Q2 sont polarisés par deux signaux distincts, $V_{POL1}$ et $V_{POL2}$, également fournis par le dispositif de commande. Le signal de polarisation $V_{POL1}$ est appliqué sur l'électrode de grille G du transistor T21 tandis que le signal de polarisation $V_{POL2}$ est appliqué sur l'électrode de grille G' du transistor T22.

Les transistors T11-T12 du premier interrupteur Q1 et/ou les transistors T21-T22 du deuxième interrupteur Q2 sont avantageusement des transistors de type HEMT (« High Electron Mobility Transistor » en anglais) à base de GaN, car ce type de transistors présente une vitesse de commutation élevée, compatible avec les très hautes fréquences de découpage (> 50 MHz). Pour les mêmes raisons, les diodes D21 et D22 de l'interrupteur bidirectionnel Q2 peuvent être également à base de GaN.

Alternativement, les transistors des interrupteurs Q1-Q2 peuvent être des transistors MOSFET à base de silicium ou de carbure de silicium, lorsque la fréquence de découpage est plus faible.

En polarisant convenablement les grilles G-G' des transistors T21-T22, le deuxième interrupteur bidirectionnel Q2 peut commuter spontanément dans un état opposé à celui du premier interrupteur Q1, et reproduire ainsi le comportement de la diode D' utilisée dans le convertisseur Cuk DC-DC de l'art antérieur (Fig.2). Cette commutation spontanée a lieu immédiatement (i.e. sans temps morts) après la commutation commandée de l'interrupteur Q1, lors de chacune des alternances positives et négatives de la tension d'entrée.

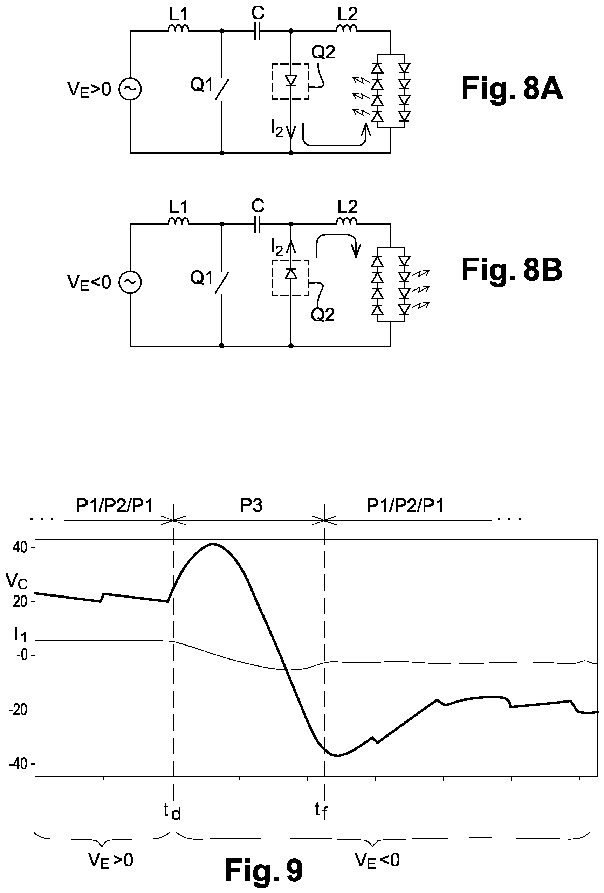

La figure 7 montre, en plus de la tension alternative d'entrée $V_E$, les chronogrammes du signal de commande $V_{CMD}$ et des signaux de polarisation $V_{POL1}$-$V_{POL2}$ des interrupteurs bidirectionnels Q1 et Q2. Par ailleurs, les figures 8A et 8B représentent le schéma équivalent du convertisseur 30 muni de l'interrupteur bidirectionnel Q2 de la figure 6B, respectivement lorsque la tension d'entrée $V_E$ est positive et lorsque la tension d'entrée $V_E$ est négative.

Lors du découpage de chaque alternance positive de la tension d'entrée $V_E$, le transistor T22 du deuxième interrupteur bidirectionnel Q2 est rendu passant grâce à une tension $V_{POL2}$ positive sur son électrode de grille G (Fig. 7 ; $V_{POL2}$ = Vdd). A l'inverse, le transistor T21 du deuxième interrupteur bidirectionnel Q2 est bloqué, car la tension $V_{POL1}$ appliquée sur son électrode de grille est nulle ($V_{POL1}$ = 0). Seule la branche comprenant le transistor T22 est alors traversé par le courant I$_2$ et le deuxième interrupteur bidirectionnel Q2 est équivalent à la diode D22 (Fig.8A).

A l'inverse, lors du découpage de chaque alternance négative, le transistor T21 est passant en appliquant une tension V$_{POL1}$ positive (Fig.7 ; V$_{POL1}$ = Vdd) alors que le transistor T22 est bloqué au moyen d'une tension V$_{POL2}$ nulle (V$_{POL2}$ = 0). Le courant électrique I$_2$ ne peut alors parcourir que la branche de l'interrupteur Q2 dans laquelle se situe le transistor T21 et le deuxième interrupteur bidirectionnel Q2 est équivalent à la diode D21 (Fig.8B).

Dans l'une ou l'autre de ces configurations, l'interrupteur Q2 se ferme automatiquement (i.e. la diode D21/D22 devient passante) lorsque l'interrupteur Q1 s'ouvre, et inversement. Cette commutation spontanée de l'interrupteur Q2 est garantie, car une diode (D21 ou D22 selon le cas) est prévue dans le bon sens quel que soit le signe de la tension d'entrée V$_E$. Le convertisseur Cuk classique au contraire ne peut pas supporter un changement de signe de la tension d'entrée V$_E$, car l'orientation de la diode D' n'est pas interchangeable (cf. Fig.2). En effet, comme il est prévu pour fonctionner en DC, et non en AC, il n'a pas été équipé d'un interrupteur bidirectionnel comme celui représenté sur la figure 6B, mais d'une seule diode, c'est-à-dire un composant unidirectionnel en tension et en courant.

Cette façon de polariser le deuxième interrupteur bidirectionnel Q2, i.e. par l'intermédiaire des signaux V$_{POL1}$ et V$_{POL2}$ de la figure 7, est simple à mettre en oeuvre car les signaux de polarisation V$_{POL1}$ et V$_{POL2}$ varient à la même fréquence F1 que la tension d'entrée V$_E$ (par exemple 50 Hz). D'autres façons de polariser le deuxième interrupteur bidirectionnel Q2, bien que moins avantageuses, pourront être mises en oeuvre dans le but d'avoir une commutation spontanée qui élimine les temps morts.

Comme indiqué précédemment, le premier interrupteur bidirectionnel Q1 est commandé successivement en ouverture et en fermeture par le dispositif de commande lors de chacune des alternances positives et négatives. Cela se traduit, sur les chronogrammes de la figure 7, par un signal rectangulaire V$_{CMD}$ à la fréquence de découpage F2 bien supérieure à la fréquence F1 de la tension d'entrée V$_E$. Par souci de clarté, la variation du rapport cyclique α de ce signal rectangulaire n'est pas représentée sur la figure 7.

La succession des cycles de découpage P1-P2 se déroulant lors de chaque alternance de la tension d'entrée V$_E$ est avantageusement interrompue par une troisième phase de fonctionnement P3, à chaque transition entre une alternance positive et une alternance négative de la tension d'entrée V$_E$. Cette troisième phase P3 correspond à un troisième état du circuit de découpage, dans lequel le premier interrupteur bidirectionnel Q1 est commandé en ouverture (V$_{CMD}$ = 0) et le deuxième interrupteur bidirectionnel Q2 est commandé en fermeture (V$_{POL1}$ = V$_{POL2}$ = Vdd).

La phase de fonctionnement P3 est appelée phase de résonance, car la source de tension alternative 31 se trouve alors connectée en série avec l'inductance d'entrée L1 et la capacité de stockage C (cf. Fig.3), formant un circuit LC résonnant.

La figure 9, qui représente l'évolution de la tension V$_C$ aux bornes de la capacité de stockage C (cf. Fig.3) lors de la phase de fonctionnement P3, montre que la tension V$_C$ est positive à la fin d'une alternance positive de la tension d'entrée V$_E$ (V$_E$>0). Si l'on démarrait un nouveau cycle de découpage P1/P2 avec la tension d'entrée V$_E$ devenue négative (V$_E$<0) et la tension V$_C$ restée positive, on provoquerait un court-circuit de la capacité de stockage C au travers de la branche constituée de la diode D21 et du transistor T21 (d'où Vc = 0).

La phase de résonance P3 permet au contraire d'inverser la tension V$_C$ aux bornes de la capacité de stockage C (ainsi que le courant I$_1$ dans l'inductance d'entrée, cf. Fig.9) lors du changement de signe de la tension d'entrée V$_E$, évitant ainsi une décharge brutale de la capacité dans les interrupteurs bidirectionnels Q1 et Q2. Cette phase P3 peut donc être considérée comme une phase de synchronisation de l'ensemble des signaux du convertisseur avec le changement d'alternance de la tension d'entrée.

De préférence, la phase de résonance P3 débute à un premier instant t$_d$ de passage à zéro de la tension alternative d'entrée V$_E$ (cf. Figs.7, 9) et prend fin à un deuxième instant t$_f$ lorsque la tension V$_C$ mesurée aux bornes de la capacité de stockage atteint une valeur de signe opposé à celle mesurée au premier instant t$_d$ (Fig.9). Autrement dit, la phase de résonance P3 a lieu au tout début de chaque alternance. La valeur de la tension V$_C$ au deuxième instant t$_f$ est de préférence supérieure en valeur absolue à la tension nominale de la charge. Le dispositif de commande des interrupteurs Q1-Q2 est avantageusement équipé d'un circuit de mesure de la tension V$_C$, afin de déterminer quand initier et quand interrompre la phase de résonance P3.

Alternativement, la durée de la phase P3 peut être prédéfinie. Elle est de préférence égale à une demi-période de résonance du circuit LC, soit $\pi\sqrt{L1.C}$.

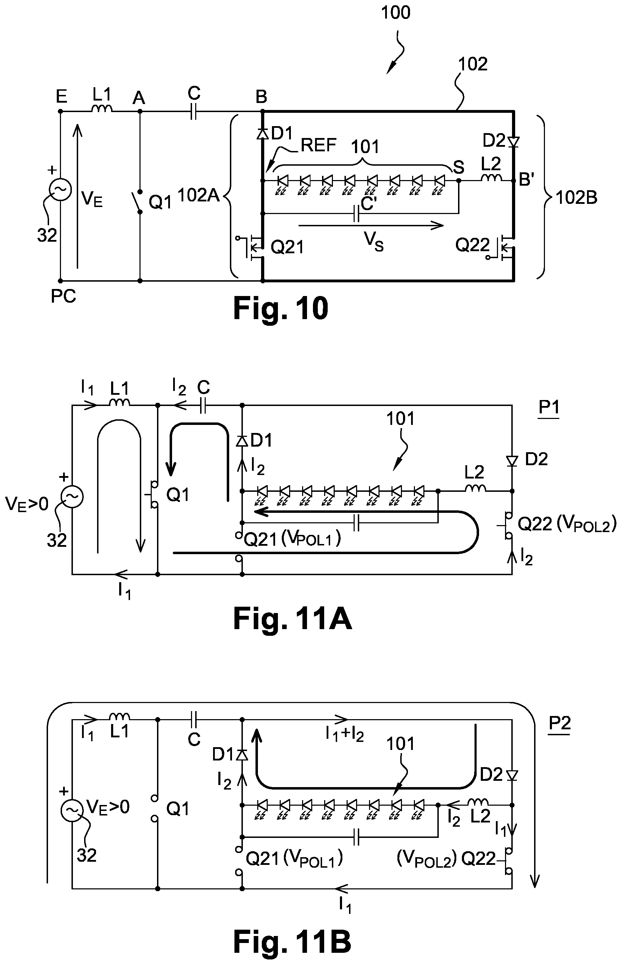

La figure 10 est le schéma électrique d'un convertisseur électronique 100 selon un deuxième mode de réalisation de l'invention.

A la différence du convertisseur 30 représenté sur la figure 3, le convertisseur 100 est couplé à une charge unidirectionnelle 101, par exemple munie d'une pluralité de LED connectée en série. La charge unidirectionnelle 101 est, comme la charge bidirectionnelle 31, connectée entre la borne de sortie S et la borne de référence REF du convertisseur. La borne de sortie S constitue le point d'entrée du courant fourni par le convertisseur dans la charge unidirectionnelle 101.

Le convertisseur 100 comprend les mêmes composants que le convertisseur 30 du premier mode de réalisation, à l'exception du deuxième interrupteur bidirectionnel Q2. Le convertisseur comprend ainsi une inductance d'entrée L1 connectée à la borne d'entrée E, une inductance de sortie L2 connectée à la borne de sortie S, une capacité de stockage C disposée entre les inductances L1 et L2, un premier interrupteur bidirectionnel Q1 et son dispositif de commande (non représenté).

Dans le convertisseur 100, le deuxième interrupteur bidirectionnel Q2 est remplacé par un pont redresseur commandé 102 de type Graetz. Les composants de celui-ci sont répartis de façon à orienter le courant dans la charge 101 dans le même sens quel que soit le signe de la tension d'entrée $V_E$. Ainsi, toutes les LED de la charge 101 sont utilisées simultanément. L'entrée du pont redresseur 102 est branchée entre le noeud B, auquel est connectée la deuxième extrémité de la capacité de stockage C (la première extrémité étant connectée à l'inductance d'entrée L1), et la borne commune PC. Autrement dit, l'entrée du pont redresseur 102 se situe à l'emplacement du deuxième interrupteur bidirectionnel Q2 de la figure 3. La sortie du pont redresseur 102 se situe entre la borne de référence REF et le noeud B', auquel est connectée la première extrémité de l'inductance de sortie L2 (la deuxième extrémité étant connectée à la borne de sortie S). La charge 101 et l'inductance L2 sont ainsi placées en sortie du pont redresseur 102.

Le pont redresseur 102 comporte quatre composants dont au moins deux interrupteurs bidirectionnels en courant Q21 et Q22. Par exemple, chacun des interrupteurs Q21 et Q22 comprend un transistor de puissance de type NMOS, de préférence de type HEMT à base de GaN. Lorsque le pont redresseur 102 comprend seulement deux ou trois interrupteurs, les autres composants sont des diodes.

Dans l'exemple représenté sur la figure 10, le pont redresseur 102 comporte dans une branche 102A une première diode D1 et un premier interrupteur Q21. La cathode de la diode D1 est connectée à la capacité de stockage C (au noeud B) et son anode est connectée à la borne de référence REF. L'interrupteur Q21 possède une première extrémité connectée à la borne de référence REF et une deuxième extrémité connectée à la borne commune PC. Ainsi, dans ce mode de réalisation du convertisseur, la borne REF est séparée de la borne commune PC par le premier interrupteur Q21.

Dans l'autre branche 102B, le point redresseur comporte une deuxième diode D2 et un deuxième interrupteur Q22. L'anode de la diode D2 est connectée à la capacité de stockage (i.e. au noeud B) et la cathode est connectée à la première extrémité de l'inductance de sortie L2 (i.e. au noeud B'). Le deuxième interrupteur Q22 possède une première extrémité connectée à la première extrémité de l'inductance de sortie L2 et une deuxième extrémité connectée à la borne commune PC.

En dépit de ces différences structurelles, le convertisseur 100 de la figure 10 possède sensiblement le même fonctionnement que le convertisseur 30 de la figure 3. On distingue notamment les deux mêmes phases de fonctionnement P1 et P2. Pendant quasiment toute la durée des alternances positives et négatives de la tension d'entrée $V_E$, le convertisseur 100 alterne entre les phases P1 et P2 à la fréquence de découpage.

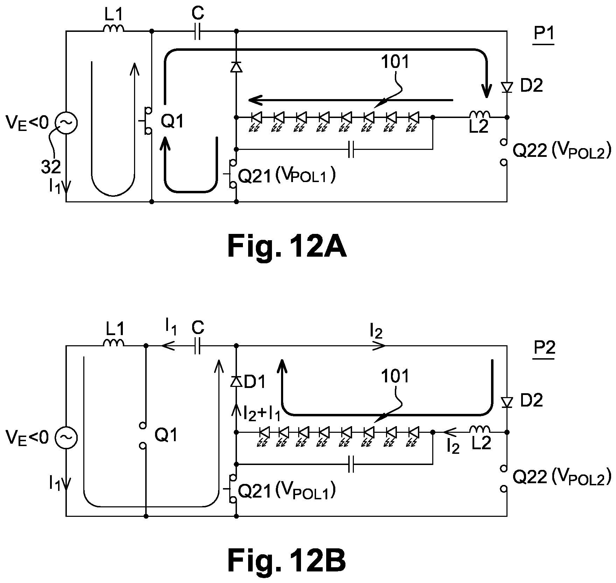

Les figures 11A et 11B représentent schématiquement le convertisseur 100 alors que la tension alternative d'entrée $V_E$ est positive, respectivement lors de la première phase de fonctionnement P1 et de la deuxième phase de fonctionnement P2. Les figures 12A et 12B montrent le convertisseur 100 pendant ces mêmes phases, mais lorsque la tension alternative d'entrée $V_E$ est négative.

Le dispositif de commande des interrupteurs Q1 et Q21-Q22 ferme l'interrupteur bidirectionnel Q1 lors de la première phase de fonctionnement P1, quel que soit le signe de la tension alternative d'entrée $V_E$ (Fig.11A & Fig.12A). Ainsi, l'inductance d'entrée L1 se charge grâce au courant $I_1$ fourni par la source de tension 32. Comme décrit précédemment en relation avec la figure 3, seul le sens du courant $I_1$ varie selon que la première phase P1 a lieu pendant une alternance positive ou pendant une alternance négative de la tension d'entrée $V_E$.

Par contre, la configuration du pont redresseur 102 dépend du signe de la tension d'entrée $V_E$. Lors d'une alternance positive (Fig.11A), le premier interrupteur Q21 est ouvert alors que le deuxième interrupteur Q22 est fermé. A l'inverse, lors d'une alternance négative (Fig.12A), le premier interrupteur Q21 est fermé alors que le deuxième interrupteur Q22 est ouvert.

Dans les deux cas, cette commande du pont redresseur 102 a pour effet de décharger la capacité de stockage C dans l'inductance de sortie L2 en produisant en courant $I_2$ qui traverse la charge 101. Toutefois, le parcours du courant $I_2$ varie entre les deux cas. Dans le cas de la figure 11A ($V_E > 0$), le courant $I_2$ traverse successivement l'interrupteur bidirectionnel Q1, le deuxième transistor Q22 du pont redresseur 102, l'inductance de sortie L2, la charge 101 et la première diode D1 du pont redresseur 102. Dans le cas de la figure 12A ($V_E < 0$), le courant $I_2$ traverse successivement la deuxième diode D2 du pont redresseur 102, l'inductance de sortie L2, la charge 101, le premier interrupteur Q21 du pont redresseur 102 et l'interrupteur bidirectionnel Q1.

Pendant la phase de fonctionnement P2 représentée sur les figures 11B et 12B, l'interrupteur bidirectionnel Q1 est commandé en ouverture. Par ailleurs, si la tension d'entrée $V_E$ est positive (Fig.11B), le premier interrupteur Q21 du pont redresseur 102 est ouvert, alors que son deuxième interrupteur Q22 est fermé. Le courant $I_1$ issu de la source 32 parcourt alors une boucle comprenant l'inductance d'entrée L1, la capacité de stockage C et la deuxième branche 102B du pont redresseur (diode D2 et interrupteur Q22). Ainsi, l'inductance d'entrée L1 transfère sa charge dans la capacité de stockage C. Simultanément, la charge contenue dans l'inductance de sortie L2 se dissipe en alimentant les LED de la charge 101. Le courant $I_2$ fourni par l'inductance de sortie L2 décrit une boucle en traversant la charge 101 et les diodes D1-D2.

Si au contraire la tension d'entrée $V_E$ est négative (Fig.12B), le premier interrupteur Q21 est fermé et le deuxième interrupteur Q22 est ouvert. Le courant $I_1$ traverse alors successivement la première branche 102A du pont redresseur (diode D1 et interrupteur Q21), la capacité de stockage C et l'inductance d'entrée L1 avant de retourner à la source 32. Le courant $I_2$ circule par contre de la même façon que précédemment à travers les diodes D21-D22. Ainsi, les mêmes transferts de charge ont lieu entre les figures 12A et 12B, mais par l'intermédiaire d'une autre boucle en ce qui concerne le transfert de charge de l'inductance d'entrée L1 vers la capacité de stockage C.

Les signaux de commande des interrupteurs Q1 et Q21-Q22 lors de chaque alternance de la tension d'entrée $V_E$ sont identiques à ceux représentés sur la figure 7. En effet, l'interrupteur bidirectionnel Q1 du convertisseur 100 est piloté par le signal $V_{CMD}$ à la fréquence de découpage F2 en faisant varier son rapport cyclique a, comme décrit en relation avec la figure 5. Les interrupteurs Q21 et Q22 du pont redresseur 102 sont respectivement commandés par les signaux $V_{POL1}$ et $V_{POL2}$. Le signal $V_{POL1}$ est nul ($V_{POL1}$ = 0) pendant chaque alternance positive pour ouvrir le premier interrupteur Q21 du pont redresseur 102 (cf. Figs. 11A-11B), mais positif ($V_{POL1}$ = Vdd) lors de chaque alternance négative pour fermer ce même interrupteur Q21 (cf. Figs. 12A-12B). A l'inverse, le signal $V_{POL2}$ est positif ($V_{POL2}$ = Vdd) pendant chaque alternance positive pour fermer le deuxième interrupteur Q22 du pont redresseur 102 (cf. Figs. 11A-11B), mais nul ($V_{POL2}$ = 0) lors de chaque alternance négative pour ouvrir ce même interrupteur Q22 (cf. Figs. 12A-12B).

Les phases de fonctionnement P1 et P2 du convertisseur 100 sont cadencées par la commutation commandée du premier interrupteur Q1. Le pont redresseur 102 alterne automatiquement entre les configurations représentées sur les figures 11A-11B et 12A-12B, en fonction des potentiels électriques dans le convertisseur (compte tenu de sa polarisation).

Pour les mêmes raisons qu'évoquées précédemment en relation avec la figure 9, le fonctionnement du convertisseur 100 comporte avantageusement une phase de résonance P3 à chaque transition entre les alternances positives et négatives. Cette phase de résonance P3 est activée au début de chaque alternance en ouvrant l'interrupteur bidirectionnel Q1 et en fermant les interrupteurs Q21 et Q22 du pont redresseur 102. La source de tension 32 est alors connectée en série avec l'inductance d'entrée L1 et la capacité de stockage C (cf. Figs. 11B et 12B).

Ainsi, lors de cette phase P3, les signaux de commande $V_{POL1}$ et $V_{POL2}$ des interrupteurs Q21-Q22 sont identiques à ceux représentés sur la figure 7 pour les transistors T21-T22 de la figure 3.

Le convertisseur électronique 30 de la figure 3 et le convertisseur électronique 100 de la figure 10 peuvent chacun comporter une capacité de lissage C' connectée en parallèle de la charge. Cette capacité optionnelle C' permet d'éliminer les variations de courant résiduelles ayant lieu à chaque transition entre les alternances positives et négatives. Toutefois, comme ces variations de courant sont brèves et de faible amplitude, cette capacité de lissage est avantageusement de faible valeur, environ 200 pF (à une fréquence de découpage de 50 MHz).

De nombreuses variantes et modifications du convertisseur électronique selon l'invention apparaitront à l'homme du métier. En particulier, les interrupteurs bidirectionnels Q1-Q2 et le pont redresseur de type Graetz 102 pourront être conçus différemment pour obtenir le fonctionnement décrit ci-dessus.

## Revendications

1. Convertisseur électronique (30, 100) comportant une borne d'entrée (E), une borne commune (PC), une borne de sortie (S) et une borne de référence (REF), et permettant un transfert de puissance d'une source de tension alternative (32) vers une charge (31, 101), lorsque la source de tension alternative (32) est connectée entre la borne d'entrée (E) et la borne commune (PC) et lorsque la charge (31, 101) est connectée entre la borne de sortie (S) et la borne de référence (REF), la tension alternative ($V_E$) ayant une première fréquence (F1) et comprenant des alternances positives entremêlées d'alternances négatives, ledit convertisseur comportant :

   - une inductance d'entrée (L1) ayant une première extrémité connectée à la borne d'entrée (E) de manière à recevoir la tension alternative ($V_E$) ;
   - une inductance de sortie (L2) connectée à la borne de sortie (S) ;
   - une capacité de stockage (C) disposée entre l'inductance d'entrée et l'inductance de sortie ;
   - un circuit de découpage configuré pour :

      ◦ dans un premier état de fonctionnement (P1), charger l'inductance d'entrée (L1) grâce à la source de tension alternative (32) et décharger la capacité de stockage (C) dans l'inductance de sortie (L2) en alimentant la charge (31, 101) ;
      ◦ dans un deuxième état de fonctionnement (P2), décharger l'inductance d'entrée (L1) dans la capacité de stockage (C) et décharger l'inductance de sortie (L2) en alimentant la charge ;

le circuit de découpage comprenant un premier interrupteur bidirectionnel (Q1) en tension et en courant, ayant une première extrémité connectée à une deuxième extrémité de l'inductance d'entrée (L1) et une deuxième extrémité connectée à la borne commune (PC) ;

**caractérisé en ce que** ledit convertisseur comporte :

- un dispositif de commande (33) du circuit de découpage, configuré pour activer, lors de chacune des alternances positives et négatives, des cycles successifs de fonctionnement à une deuxième fréquence (F2) supérieure à la première fréquence (F1), chaque cycle de fonctionnement étant constitué du premier état de fonctionnement (P1) et du deuxième état de fonctionnement (P2), le premier état de fonctionnement ayant un rapport cyclique ($\alpha$) qui varie de façon à obtenir une tension de sortie ($V_S$) constante entre la borne de sortie (S) et la borne de référence (REF) lors de chacune des alternances positives et négatives.

2. Convertisseur (30, 100) selon la revendication 1, dans lequel le dispositif de commande (33) est configuré pour faire varier le rapport cyclique ($\alpha$) selon des sens de variation identiques à ceux de la tension alternative ($V_E$) lors de chaque alternance négative et selon des sens de variation opposés à ceux de la tension alternative lors de chaque alternance positive.

3. Convertisseur (30, 100) selon l'une des revendications 1 et 2, dans lequel le dispositif de commande (33) est configuré pour faire varier le rapport cyclique ($\alpha$) de façon périodique à une troisième fréquence égale au double de la première fréquence (F1).

4. Convertisseur (30, 100) selon l'une quelconque des revendications 1 à 3, dans lequel le circuit de découpage est en outre configuré pour connecter l'inductance d'entrée (L1) et la capacité de stockage (C) en série avec la source de tension alternative (32) dans un troisième état de fonctionnement (P3), et le dispositif de commande (33) est en outre configuré pour activer le troisième état de fonctionnement à chaque transition entre les alternances positives et négatives.

5. Convertisseur (30, 100) selon la revendication 4, dans lequel le dispositif de commande (33) est en outre configuré pour mesurer la tension ($V_C$) aux bornes de la capacité de stockage (C) et dans lequel le troisième état de fonctionnement (P3) débute sensiblement à un premier instant ($t_d$) de passage à zéro de la tension alternative et prend fin à un deuxième instant ($t_f$) lorsque la tension mesurée aux bornes de la capacité de stockage (C) atteint une valeur de signe opposé à celle mesurée au premier instant.

6. Convertisseur (100) selon l'une quelconque des revendications 1 à 5, dans lequel :

- la deuxième extrémité de l'inductance d'entrée (L1) est connectée à une première électrode de la capacité de stockage (C),
- l'inductance de sortie (L2) comprend une première extrémité et une deuxième extrémité connectée à la borne de sortie (S) ;
- le circuit de découplage comprend en outre un pont redresseur commandé (102) de type Graetz ayant une entrée connectée entre une deuxième électrode de la capacité de stockage (C) et la borne commune (PC), et une sortie connectée entre la borne de référence (REF) et la première extrémité de l'inductance de sortie (L2).

7. Convertisseur (100) selon la revendication 6, dans lequel le pont redresseur commandé (102) de type Graetz comporte quatre composants dont au moins deux transistors (Q21, Q22).

8. Convertisseur (100) selon l'une des revendications 6 et 7, dans lequel le pont redresseur commandé (102) de type Graetz comporte :

- une première diode (D1) ayant une cathode connectée à la deuxième électrode de la capacité de stockage (C) et une anode connectée à la borne de référence (REF) ;
- un premier transistor (Q21) ayant une première extrémité connectée à la borne de référence (REF) et une deuxième extrémité connectée à la borne commune (PC) ;
- une deuxième diode (D2) ayant une anode connectée à la deuxième électrode de la capacité de stockage (C) et une cathode connectée à la première extrémité de l'inductance de sortie (L2) ; et
- un deuxième transistor (Q22) ayant une première extrémité connectée à la première extrémité de l'inductance de sortie (L2) et une deuxième extrémité connectée à la borne commune (PC).

9. Convertisseur (100) selon la revendication 8, dans lequel :

- le premier interrupteur bidirectionnel (Q1) est commandé successivement en ouverture et en fermeture par le dispositif de commande lors de chacune des alternances positives et négatives ;
- le premier transistor (Q21) est commandé par le dispositif de commande en ouverture lors de chacune des alternances positives et en fermeture lors de chacune des alternances négatives ;
- le deuxième transistor (Q22) est commandé par le dispositif de commande en fermeture lors de chacune des alternances positives et en ouverture lors de chacune des alternances négatives ; et
- le premier interrupteur bidirectionnel (Q1) est commandé en ouverture par le dispositif de commande à chaque transition entre les alternances positives et négatives ;
- les premier et deuxième transistors (Q21, Q22) sont commandés en fermeture par le dispositif de commande à chaque transition entre les alternances positives et négatives.

10. Convertisseur (30) selon l'une quelconque des revendications 1 à 5, dans lequel :

- la borne de référence (REF) est connectée à la borne commune (PC) ;
- la deuxième extrémité de l'inductance d'entrée (L1) est connectée à une première électrode de la capacité de stockage (C) ;
- l'inductance de sortie (L2) comprend une première extrémité connectée à une deuxième électrode de la capacité de stockage (C) et une deuxième extrémité connectée à la borne de sortie (S) ;
- le circuit de découplage comprend en outre un deuxième interrupteur bidirectionnel (Q2) ayant une première extrémité connectée à la première extrémité de l'inductance de sortie (L2) et une deuxième extrémité connectée à la borne commune (PC).

11. Convertisseur (30) selon la revendication 10, dans lequel :

- le premier interrupteur bidirectionnel (Q1) est commandé successivement en ouverture et en fermeture par le dispositif de commande (33) lors de chacune des alternances positives et négatives ;
- le deuxième interrupteur bidirectionnel (Q2) est configuré pour commuter spontanément entre ouverture et fermeture lors de chacune des alternances positives et négatives ;
- le premier interrupteur bidirectionnel (Q1) est commandé en ouverture par le dispositif de commande (33) à chaque transition entre les alternances positives et négatives ;
- le deuxième interrupteur bidirectionnel (Q2) est commandé en fermeture par le dispositif de commande (33) à chaque transition entre les alternances positives et négatives.

12. Convertisseur (30) selon l'une des revendications 10 et 11, dans lequel le deuxième interrupteur bidirectionnel (Q2) comprend des première et deuxième branches connectées en parallèle, la première branche comprenant un premier transistor (T21) et une première diode (D21) connectés en série, la deuxième branche comprenant un deuxième transistor (T22) et une deuxième diode (D22) connectés en série, les première et deuxième diodes étant montées dans des sens contraires.

13. Convertisseur (30, 100) selon l'une quelconque des revendications 5 à 12, dans lequel le premier interrupteur bidirectionnel (Q1) comporte des premier et deuxième transistors (T11, T12) montés en série tête-bêche et commandés par un seul et même signal ($V_{CMD}$) issu du dispositif de commande (33).

14. Convertisseur (30, 100) selon la revendication 13, dans lequel dans lequel les premier et deuxième transistors (T11, T12) du premier interrupteur bidirectionnel (Q1) sont des transistors HEMT à base de nitrure de gallium

15. Système d'éclairage comprenant :

- un convertisseur électronique (30, 100) selon l'une quelconque des revendications 1 à 14 ; et
- une charge (31, 101) munie d'au moins une LED et connectée entre la borne de sortie (S) et la borne de référence (REF) du convertisseur électronique.

16. Système d'éclairage comprenant :

- un convertisseur électronique (100) selon l'une quelconque des revendications 6 à 9 ; et
- une charge (101) connectée entre la borne de sortie (S) et la borne de référence (REF) du convertisseur électronique et munie d'une série de LED, la borne de sortie (S) du convertisseur électronique (100) constituant un point d'entrée du courant dans la série de LED.

17. Système d'éclairage comprenant :

- un convertisseur électronique (30) selon l'une quelconque des revendications 10 à 14 ; et
- une charge (31) connectée entre la borne de sortie (S) et la borne de référence (REF) du convertisseur électronique et munie de deux séries de LED connectées en antiparallèle.

**Patentansprüche**

1. Elektronischer Wandler (30, 100), umfassend eine Eingangsklemme (E), eine gemeinsame Klemme (PC), eine Ausgangsklemme (S) und eine Referenzklemme (REF), die eine Leistungsübertragung von einer Wechselspannungsquelle (32) zu einer Last (31, 101) zulässt, wenn die Wechselspannungsquelle (32) zwischen der Eingangsklemme (E) und der gemeinsamen Klemme (PC) angeschlossen ist und wenn die Last (31, 101) zwischen der Ausgangsklemme (S) und der Referenzklemme (REF) angeschlossen ist, wobei die Wechselspannung ($V_E$) eine erste Frequenz (F1) aufweist und positive Wechsel umfasst, die mit negativen Wechseln vermischt sind, wobei der genannte Wandler umfasst:

- eine Eingangsinduktanz (L1), die ein erstes Ende aufweist, das an die Eingangsklemme (E) derart angeschlossen ist, dass die Wechselspannung ($V_E$) empfangen ist;
- eine Ausgangsinduktanz (L2), die an die Ausgangsklemme (S) angeschlossen ist;
- eine Speicherkapazität (C), die zwischen der Eingangsinduktanz und der Ausgangsinduktanz angeordnet ist;
- einen Segmentierungsschaltkreis, der konfiguriert ist, um:

  ◦ in einem ersten Betriebszustand (P1) die Eingangsinduktanz (L1) anhand der Wechselspannungsquelle (32) zu laden und die Speicherkapazität (C) in die Ausgangsinduktanz (L2) zu entladen, indem die Last (31, 101) versorgt wird;
  ◦ in einem zweiten Betriebszustand (P2) die Eingangsinduktanz (L1) in die Speicherkapazität (C) zu laden und die Ausgangsinduktanz (L2) zu entladen, indem die Last (31, 101) versorgt wird;

  wobei der Segmentierungsschaltkreis einen ersten, unter Spannung und Strom stehenden bidirektionalen Schalter (Q1) umfasst, der ein erstes, an einem zweiten Ende der Eingangsinduktanz (L1) angeschlossenes Ende und ein zweites, an die gemeinsame Klemme (PC) angeschlossenes Ende aufweist;

  **dadurch gekennzeichnet, dass** der genannte Wandler umfasst:

  - eine Steuervorrichtung (33) des Segmentierungsschaltkreises, die konfiguriert ist, um bei jedem der positiven und negativen Wechsel sukzessive Betriebszyklen in einer zweiten Frequenz (F2) zu aktivieren, die höher ist als die erste Frequenz (F1), wobei jeder Betriebszyklus aus dem ersten Betriebszustand (F1) und dem zweiten Betriebszustand (P2) gebildet ist, wobei der erste Betriebszustand ein zyklisches Verhältnis ($\alpha$) aufweist, das derart variiert, dass bei jedem positiven und negativen Wechsel eine konstante Ausgangsspannung ($V_S$) zwischen der Ausgangsklemme (S) und der Referenzklemme (REF) erhalten wird.

2. Wandler (30, 100) gemäß Anspruch 1, bei dem die Steuervorrichtung (33) konfiguriert ist, um das zyklische Verhältnis ($\alpha$) bei jedem negativen Wechsel gemäß den Variationsrichtungen, die mit denen der Wechselspannung ($V_E$) identisch sind, und bei jedem positiven Wechsel gemäß den Variationsrichtungen, die denen der Wechselspannung entgegengesetzt sind, zu variieren.

3. Wandler (30, 100) gemäß einem der Ansprüche 1 und 2, bei dem die Steuervorrichtung (33) konfiguriert ist, um das zyklische Verhältnis ($\alpha$) periodisch in einer dritten Frequenz zu variieren, die gleich dem Doppelten der ersten Frequenz (F1) ist.

4. Wandler (30, 100) gemäß irgendeinem der Ansprüche 1 bis 3, bei dem der Segmentierungsschaltkreis darüber hinaus konfiguriert ist, um die Eingangsinduktanz (L1) und die Speicherkapazität (C) in Serie in einem dritten Betriebszustand (P3) an die Wechselstromquelle (32) anzuschließen, und die Steuervorrichtung (33) darüber hinaus konfiguriert, ist um den dritten Betriebszustand bei jedem Übergang zwischen den positiven und negativen Wechseln zu aktivieren.

5. Wandler (30, 100) gemäß Anspruch 4, bei dem die Steuervorrichtung (33) darüber hinaus konfiguriert ist, um die Spannung ($V_C$) an den Klemmen der Speicherkapazität (C) zu messen und bei dem der dritte Betriebszustand (P3) deutlich in einem ersten Durchgangsmoment ($t_d$) der Wechselspannung bei Null beginnt und in einem zweiten Moment (tf) endet, wenn die an den Klemmen der Speicherkapazität (C) gemessene Spannung einen Zeichenwert erreicht, der dem, der im ersten Moment gemessen ist, entgegengesetzt ist.

6. Wandler (100) gemäß irgendeinem der Ansprüche 1 bis 5, bei dem:

- das zweite Ende der Eingangsinduktanz (L1) an eine erste Elektrode der Speicherkapazität (C) angeschlossen ist,
- die Ausgangsinduktanz (L2) ein erstes Ende und ein zweites Ende umfasst, das an die Ausgangsklemme (S) angeschlossen ist;
- der Segmentierungsschaltkreis darüber hinaus eine Steuer-Gleichrichterbrücke (102) vom Typ Graetz umfasst, die einen Eingang, der zwischen einer zweiten Elektrode der Speicherkapazität (C) und der gemeinsamen Klemme (PC) angeschlossen ist, und einen Ausgang, der zwischen der Referenzklemme (REF) und dem ersten Ende der Ausgangsinduktanz (L2) angeschlossen ist, umfasst.

7. Wandler (100) gemäß Anspruch 6, bei dem die Steuer-Gleichrichterbrücke (102) vom Typ Graetz vier Komponenten umfasst, davon wenigstens zwei Transistoren (Q21, Q22).

8. Wandler (100) gemäß einem der Ansprüche 6 und 7, bei dem die Steuer-Gleichrichterbrücke (102) vom Typ Graetz umfasst:

- eine erste Diode (D1), die eine an die zweite Elektrode der Speicherkapazität (C) angeschlossene Kathode und eine an die Referenzklemme (REF) angeschlossene Anode aufweist;
- einen ersten Transistor (Q21), der ein erstes, an die Referenzklemme (REF) angeschlossenes Ende und ein zweites, an die gemeinsame Klemme (PC) angeschlossenes Ende aufweist;
- eine zweite Diode (D2), die eine an die zweite Elektrode der Speicherkapazität (C) angeschlossene Anode und eine an das erste Ende der Ausgangsinduktanz (L2) angeschlossene Kathode aufweist; und
- einen zweiten Transistor (Q22), der ein erstes, an das erste Ende der Ausgangsinduktanz angeschlossenes Ende und ein zweites, an die gemeinsame Klemme (PC) angeschlossenes Ende aufweist;

9. Wandler (100) gemäß Anspruch 8, bei dem:

- der erste bidirektionale Schalter (Q1) sukzessive öffnend und schließend durch die Steuervorrichtung bei jedem positiven und negativen Wechsel gesteuert ist;
- der erste Transistor (Q21) durch die Steuervorrichtung öffnend bei jedem positiven Wechsel und schließend bei jedem negativen Wechsel gesteuert ist;
- der zweite Transistor (Q22) durch die Steuervorrichtung schließend bei jedem positiven Wechsel und öffnend bei jedem negativen Wechsel gesteuert ist; und
- der erste bidirektionale Schalter (Q1) öffnend durch die Steuervorrichtung bei jedem Übergang zwischen dem positiven und negativen Wechsel gesteuert ist;
- der erste und der zweite Transistor (Q21, Q22) schließend durch die Steuervorrichtung bei jedem Übergang zwischen dem positiven und negativen Wechsel gesteuert sind;

10. Wandler (30) gemäß irgendeinem der Ansprüche 1 bis 5, bei dem:

- die Referenzklemme (REF) an die gemeinsame Klemme (PC) angeschlossen ist;
- das zweite Ende der Eingangsinduktanz (L1) an eine erste Elektrode der Speicherkapazität (C) angeschlossen ist,
- die Ausgangsinduktanz (L2) ein erstes Ende, das an eine zweite Elektrode der Speicherkapazitanz (C) angeschlossen ist, und ein zweites Ende, das an die Ausgangsklemme (S) angeschlossen ist, umfasst;
- der Segmentierungsschaltkreis darüber hinaus einen zweiten bidirektionalen Schalter (Q2) umfasst, der ein erstes, an das erste Ende der Ausgangsinduktanz (L2) angeschlossenes Ende und ein zweites, an die gemeinsame Klemme (PC) angeschlossenes Ende aufweist;

**11.** Wandler (30) gemäß Anspruch 10, bei dem:

- der erste bidirektionale Schalter (Q1) sukzessive öffnend und schließend durch die Steuervorrichtung (33) bei jedem positiven und negativen Wechsel gesteuert ist;
- der zweite bidirektionale Schalter (Q2) konfiguriert ist, um spontan zwischen Öffnung und Verschluss bei jedem positiven und negativen Wechsel zu schalten;
- der erste bidirektionale Schalter (Q1) öffnend durch die Steuervorrichtung (33) bei jedem positiven und negativen Wechsel gesteuert ist;
- der zweite bidirektionale Schalter (Q2) schließend durch die Steuervorrichtung (33) bei jedem Übergang zwischen positivem und negativem Wechsel gesteuert ist;

**12.** Wandler (30) gemäß einem der Ansprüche 10 und 11, bei dem der zweite bidirektionale Schalter (Q2) erste und zweite parallel angeschlossene Zweige umfasst, wobei der erste Zweig einen ersten Transistor (T21) und eine zweite Diode (D21) umfasst, die in Serie angeschlossen sind, wobei der zweite Zweig einen zweiten Transistor (T22) und eine zweite Diode (D22) umfasst, die in Serie angeschlossen sind, wobei die erste und zweite Diode in entgegengesetzten Richtungen montiert sind.

**13.** Wandler (30, 100) gemäß irgendeinem der Ansprüche 5 bis 12, bei dem der erste bidirektionale Schalter (Q1) erste und zweite Transistoren (T11, T12) umfasst, die in Serie kopfüber montiert und durch ein einziges und dasselbe Signal ($V_{CMD}$) gesteuert sind, das aus der Steuervorrichtung (33) stammt.

**14.** Wandler (30, 100) gemäß Anspruch 13, bei dem der erste und zweite Transistor (T11, T12) des ersten bidirektionalen Schalters (Q1) HEMT-Transistoren auf Gallium-Nitridbasis sind.

**15.** Beleuchtungssystem, umfassend:

- einen elektronischen Wandler (30, 100) gemäß irgendeinem der Ansprüche 1 bis 14, und
- eine Last (31, 101), die wenigstens mit einer LED versehen und zwischen der Ausgangsklemme (S) und der Referenzklemme (REF) des elektronischen Wandlers angeschlossen ist.

**16.** Beleuchtungssystem, umfassend:

- einen elektronischen Wandler (100) gemäß irgendeinem der Ansprüche 6 bis 9, und
- eine Last (101), die zwischen der Ausgangsklemme (S) und der Referenzklemme (REF) des elektronischen Wandlers angeschlossen und mit einer LED-Serie versehen ist, wobei die Ausgangsklemme (S) des elektronischen Wandlers (100) einen Eingangspunkt des Stroms in der LED-Serie bildet.

**17.** Beleuchtungssystem, umfassend:

- einen elektronischen Wandler (30) gemäß irgendeinem der Ansprüche 10 bis 14, und
- eine Last (31), die zwischen der Ausgangsklemme (S) und der Referenzklemme (REF) des elektronischen Wandlers angeschlossen und mit zwei LED-Serien versehen ist, die antiparallel angeschlossen sind.

**Claims**

**1.** Electronic converter (30, 100) comprising an input terminal (E), a common terminal (PC), an output terminal (S) and a reference terminal (REF), and allowing power to be transferred from an alternating voltage source (32) to a load (31, 101), when the alternating voltage source (32) is connected between the input terminal (E) and the common terminal (PC) and when the load (31, 101) is connected between the output terminal (S) and the reference terminal (REF), the alternating voltage ($V_E$) having a first frequency (F1) and comprising positive alternations alternating with negative alternations, said converter comprising:

- an input inductor (L1) having a first end connected to the input terminal (E) so as to receive the alternating voltage ($V_E$);
- an output inductor (L2) connected to the output terminal (S);
- a storage capacitor (C) arranged between the input inductor and the output inductor;
- a chopper circuit configured:

○ in a first operating state (P1), to charge the input inductor (L1) by means of the alternating voltage source (32), and to discharge the storage capacitor (C) into the output inductor (L2) while powering the load (31, 101);
○ in a second operating state (P2), to discharge the input inductor (L1) into the storage capacitor (C), and to discharge the output inductor (L2) while powering the load;

the chopper circuit comprising a first voltage and current bidirectional switch (Q1) having a first end connected to a second end of the input inductor (L1), and a second end connected to the common terminal (PC);

**characterized in that** said converter comprises:

- a control device (33) for controlling the chopper circuit, configured to activate, during each of the positive and negative alternations, successive operating cycles at a second frequency (F2) higher than the first frequency (F1), each operating cycle consisting of the first operating state (P1) and of the second operating state (P2), the first operating state having a duty cycle ($\alpha$) which varies so as to obtain a constant output voltage (Vs) between the output terminal (S) and the reference terminal (REF) during each of the positive and negative alternations.

2. Converter (30, 100) according to claim 1, wherein the control device (33) is configured to make the duty cycle ($\alpha$) vary according to variation directions identical to those of the alternating voltage ($V_E$) during each negative alternation and according to variation directions opposite to those of the alternating voltage during each positive alternation.

3. Converter (30, 100) according to one of claims 1 and 2, wherein the control device (33) is configured to make the duty cycle ($\alpha$) vary periodically at a third frequency equal to twice the first frequency (F1).

4. Converter (30, 100), according to any one of claims 1 to 3, wherein the chopper circuit is further configured to connect the input inductor (L1) and the storage capacitor (C) in series with the alternating voltage source (32) in a third operating state (P3), and the control device (33) is further configured to activate the third operating state at each transition between the positive and negative alternations.

5. Converter (30, 100) according to claim 4, wherein the control device (33) is further configured to measure the voltage ($V_C$) at the terminals of storage capacitor (C) and wherein the third operating state (P3) starts roughly at a first instant ($t_d$) when the alternating voltage changes to zero and ends at a second instant (tf) when the voltage measured at the terminals of storage capacitor (C) reaches a value of opposite sign to the one measured at the first instant.

6. Converter (100) according to any one of claims 1 to 5, wherein:

- the second end of the input inductor (L1) is connected to a first electrode of the storage capacitor (C),
- the output inductor (L2) comprises a first end and a second end connected to the output terminal (S);
- the chopper circuit further comprises a Graetz-type controlled bridge rectifier (102) having an input connected between a second electrode of the storage capacitor (C) and the common terminal (PC), and an output connected between the reference terminal (REF) and the first end of the output inductor (L2).

7. Converter (100) according to claim 6, wherein the Graetz-type controlled bridge rectifier (102) comprises four components including at least two transistors (Q21, Q22).

8. Converter (100) according to one of claims 6 and 7, wherein the Graetz-type controlled bridge rectifier (102) comprises:

- a first diode (D1) having a cathode connected to the second electrode of the storage capacitor (C), and an anode connected to the reference terminal (REF);
- a first transistor (Q21) having a first end connected to the reference terminal (REF) and a second end connected to the common terminal (PC);
- a second diode (D2) having an anode connected to the second electrode of the storage capacitor (C), and a cathode connected to the first end of the output inductor (L2); and
- a second transistor (Q22) having a first end connected to the first end of the output inductor (L2), and a second end connected to the common terminal (PC).

9. Converter (100) according to claim 8, wherein:

- the first bidirectional switch (Q1) is made to open and close in succession by the control device during each of the positive and negative alternations;
- the first transistor (Q21) is made to open by the control device during each of the positive alternations, and to close during each of the negative alternations;
- the second transistor (Q22) is made to close by the control device during each of the positive alternations, and to open during each of the negative alternations; and
- the first bidirectional switch (Q1) is made to open by the control device at each transition between the positive and negative alternations;
- the first and second transistors (Q21, Q22) are made to close by the control device at each transition between the positive and negative alternations.

10. Converter (30) according to anyone of claims 1 to 5, wherein:

- the reference terminal (REF) is connected to the common terminal (PC);
- the second end of the input inductor (L1) is connected to a first electrode of the storage capacitor (C);
- the output inductor (L2) comprises a first end connected to a second electrode of the storage capacitor (C) and a second end connected to the output terminal (S);
- the chopper circuit further comprises a second bidirectional switch (Q2) having a first end connected to the first end of the output inductor (L2), and a second end connected to the common terminal (PC).

11. Converter (30) according to claim 10, wherein:

- the first bidirectional switch (Q1) is made to open and close in succession by the control device (33) during each of the positive and negative alternations;
- the second bidirectional switch (Q2) is configured to switch spontaneously between opening and closing during each of the positive and negative alternations;
- the first bidirectional switch (Q1) is made to open by the control device (33) at each transition between the positive and negative alternations;
- the second bidirectional switch (Q2) is made to close by the control device (33) at each transition between the positive and negative alternations.

12. Converter (30) according to one of claims 10 and 11, wherein the second bidirectional switch (Q2) comprises first and second branches connected in parallel, the first branch comprising a first transistor (T21) and a first diode (D21) connected in series, the second branch comprising a second transistor (T22) and a second diode (D22) connected in series, and the first and second diodes being mounted in opposite directions.

13. Converter (30, 100) according to any one of claims 5 to 12, wherein the first bidirectional switch (Q1) comprises first and second transistors (T11, T12) mounted in series back-to-back and controlled by a single signal ($V_{CMD}$) from the control device (33).

14. Converter (30, 100) according to claim 13, wherein the first and second transistors (T11, T12) of the first bidirectional switch (Q1) are gallium nitride HEMT transistors.

15. Lighting system comprising:

- an electronic converter (30, 100) according to any one of claims 1 to 14; and
- a load (31, 101) provided with at least one LED, connected between the output terminal (S) and the reference terminal (REF) of the electronic converter.

16. Lighting system comprising:

- an electronic converter (100) according to any one of claims 6 to 9; and
- a load (101) connected between the output terminal (S) and the reference terminal (REF) of the electronic converter, and provided with a series of LEDs, the output terminal (S) of the electronic converter (100) forming a point where the current enters into the series of LEDs.

17. Lighting system comprising:

- an electronic converter (30) according to any one of claims 10 to 14; and
- a load (31) connected between the output terminal (S) and the reference terminal (REF) of the electronic converter, and provided with two series of LED connected in antiparallel.

EP 3 345 456 B1

(Art antérieur)
**Fig. 1**

(Art antérieur)
**Fig. 2**

**Fig. 3**

21

Fig. 4A

Fig. 4B

Fig. 5

**Fig. 6A**

**Fig. 6B**

**Fig. 7**

**Fig. 8A**

**Fig. 8B**

**Fig. 9**

100

102

E    L1    A    C    B

D1    REF    101    S    L2    B'
D2

$V_E$    Q1    102A

C'

Q21    $V_S$    Q22

102B

32

PC

**Fig. 10**

$I_1$    L1    $I_2$    C
P1

D1
$I_2$    D2

$V_E > 0$    Q1
L2

Q22 ($V_{POL2}$)

32    Q21 ($V_{POL1}$)

$I_2$

$I_1$

**Fig. 11A**

$I_1$    L1    C
P2

$I_1 + I_2$    101

D1
$I_2$    D2

$V_E > 0$    Q1

$I_2$    L2    $I_1$

Q21 ($V_{POL1}$)    ($V_{POL2}$) Q22

32

$I_1$

**Fig. 11B**

**Fig. 12A**

**Fig. 12B**

## RÉFÉRENCES CITÉES DANS LA DESCRIPTION

**Documents brevets cités dans la description**

- US 2012104972 A1
- US 8076920 B1
- WO 2012172472 A1

**Littérature non-brevet citée dans la description**

- **TOMM F L et al.** *HID Lamp Electronic Ballast Based on Chopper Converters*
- **AHMED HAFIZ FURQAN et al.** *A high frequency isolated single-phase impedance-source ac-ac converter*
- **SEIFI NAJMI E et al.** *Discontinuous Energy Pump Source AC/AC converters*